# EUROPEAN PATENT APPLICATION

(11) **EP 4 826 423 A1**
(43) Date of publication of application: **21.10.2026**
(21) Application number: 23961334.2
(22) Date of filing: 11.12.2023
(51) Int. Cl.: G02B 6/36

(54) **CLEANING ASSISTANCE ATTACHMENT FOR OPTICAL CONNECTOR CLEANING TOOL**

(71) Applicant: NTT Advanced Technology Corporation, Tokyo 163-1436 (JP)
(72) Inventor: KAMOUCHI Terumasa, Tokyo 163-1436 (JP); HASHIMOTO Etsu, Tokyo 163-1436 (JP)
(74) Representative: Samson & Partner Patentanwälte mbB
(86) International application number: PCT/JP2023/044202
(87) International publication number: WO 2025/126264

(57) **Abstract**

A cleaning assisting attachment is formed from a tubular body (41) in which a cleaning unit of an optical connector cleaning tool can be inserted. A fitting portion (43) configured to fit on a cleaning target is formed at one end portion of the tubular body (41). A space (44) in the tubular body (41) is wider than the width of the optical connector cleaning tool in a direction in which a plurality of ferules are arranged. A plurality of grooves (46) are formed in the inner wall of the tubular body (41). The grooves (46) are formed into such a shape that a projection of the cleaning unit is fitted at positions corresponding to all the ferules.

It is possible to provide a cleaning assisting attachment of an optical connector cleaning tool, which can be applied even if the interval between ferules is small.

## Description

### Technical Field

The present invention relates to a cleaning assisting attachment of an optical connector cleaning tool that is used when cleaning an optical connector having a plurality of ferules.

### Background Art

Conventionally, when cleaning the connection end face of an optical connector by an optical connector cleaning tool, for example, a cleaning assisting attachment (to be simply referred to as an attachment hereinafter) described in patent literature 1 is sometimes used. The attachment shown in patent literature 1 is formed into a tubular shape, and employs a configuration in which an optical connector is fitted in one end portion, and an optical connector cleaning tool is fitted in the other end portion. When the optical connector and the optical connector cleaning tool are fitted in the attachment, the cleaning medium of the optical connector cleaning tool comes into contact with the connection end face of the optical connector in the attachment.

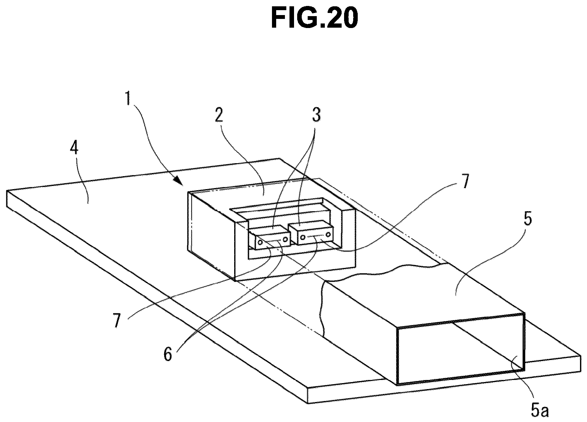

In recent years, an optical connector including a plurality of ferules, such as an ELSFP (External Laser Small Form-Factor Pluggable) that is a module looking like a conventional pluggable optical transceiver has been used. Fig. 20 shows an optical connector of this type. An optical connector 1 shown in Fig. 20 includes a plurality of ferules 3 in one housing 2. The housing 2 is supported on a substrate 4, and includes an adapter 5 having a rectangular tubular shape. The adapter 5 is formed to be long to store a long optical module (not shown) to be connected to the optical connector 1.

Each ferule 3 is provided with a plurality of optical fibers 6 arranged in line. The plurality of ferules 3 are arranged in parallel to the same direction as the direction in which the plurality of optical fibers 6 are arranged. No wall for partitioning the ferules 3 from each other is provided between the ferules 3.

For this reason, a hole in which the optical module is fitted cannot directly be used as a guide that individually guides the optical connector cleaning tool to a ferule end face 7 (a connection end face that is formed at the distal end of each ferule 3 and serves as a cleaning target surface) to which the optical fibers 6 of the ferule 3 are exposed.

When cleaning the optical connector 1, the attachment described in patent literature 1 is inserted into the adapter 5, and a guide (rod-shaped cleaning unit) extending from the main body of the optical connector cleaning tool is inserted into the guide hole of the attachment. If the adapter 5 is long, the attachment and the guide of the optical connector cleaning tool are also long.

### Related Art Literature

### Patent Literature

Japanese Patent No. 3880955

### Disclosure of Invention

### Problem to be Solved by the Invention

The attachment described in patent literature 1 cannot be applied to the optical connector 1 including the plurality of ferules 3 as shown in Fig. 20. The reason for this is as follows. In the attachment shown in patent literature 1, a guide hole in which the guide (rod-shaped cleaning unit) extending from the main body of the optical connector cleaning tool is fitted needs to be formed. When cleaning the plurality of ferules 3 using the attachment, a plurality of guide holes are provided in the attachment. A partition wall needs to be provided between the adjacent guide holes to hold the guide of the optical connector cleaning tool. For this reason, the interval between the guide holes needs to be larger than the width of the guide hole. If the attachment is formed to be adaptive to the optical connector 1 including the plurality of ferules 3, the interval between the guide holes is smaller than the width of the guide hole, and no partition wall can be formed because the holes communicate with each other. Hence, since the guide cannot be positioned in the lateral direction, the attachment cannot be applied to the optical connector 1 including the plurality of ferules 3, as described above.

It is an object of the present invention to provide a cleaning assisting attachment of an optical connector cleaning tool, which can be applied even if the interval between ferules is small.

### Means of Solution to the Problem

In order to achieve the above-described object, according to the present invention, there is provided a cleaning assisting attachment of an optical connector cleaning tool, the cleaning assisting attachment comprising
a tubular body in which a cleaning unit of the optical connector cleaning tool can be inserted, the optical connector cleaning tool being configured to clean a cleaning target surface, to which an optical fiber is exposed, using a cleaning medium at a distal end portion of the rod-shaped cleaning unit, wherein the tubular body includes a fitting portion configured to fit on a cleaning target including a plurality of ferules each having the cleaning target surface formed at a distal end is formed at one end portion of the tubular body, the cleaning target includes an outer wall located on both sides in a direction in which the plurality of ferules are arranged and at least on one side in a direction orthogonal to the direction in which the plurality of ferules are arranged and in a direction orthogonal to a direction pointed by the cleaning target surface, the fitting portion has a shape conforming to the outer wall such that the fitting portion is fitted inside or outside the outer wall, and is formed into such a shape that, in a state in which the fitting portion is fitted in the outer wall, movement of a portion fitted in the outer wall in a direction of moving toward the outer wall and movement in a direction of approaching the ferule are regulated, a space in the tubular body is formed to be wider than a width of the cleaning unit in the direction in which the plurality of ferules are arranged, a plurality of guide paths extending in a longitudinal direction of the tubular body are formed in an inner wall of the tubular body, and the guide paths are formed into such a shape that a guided portion formed by one of a convex portion and a concave portion formed on the cleaning unit is fitted at positions corresponding to all the ferules.

### Effect of the Invention

According to the present invention, it is possible to provide a cleaning assisting attachment of an optical connector cleaning tool, which can be applied even if the interval between ferules is small.

### Brief Description of Drawings

Fig. 1 is a perspective view of a cleaning assisting attachment, an optical connector, an optical module, and an optical connector cleaning tool according to the present invention;
Fig. 2 is a perspective view of the optical connector and the optical module;
Fig. 3A is a perspective view of the optical connector cleaning tool;
Fig. 3B is an enlarged perspective view showing the distal end portion of the optical connector cleaning tool;
Fig. 4A is a plan view of an adapter attachment;
Fig. 4B is a front view of the adapter attachment;
Fig. 4C is a rear view of the adapter attachment;
Fig. 4D is a perspective sectional view of the adapter attachment;
Fig. 5 is a perspective view of the optical module and an optical module attachment;
Fig. 6 is a perspective sectional view of the optical connector and the adapter attachment;
Fig. 7 is a perspective sectional view of the adapter attachment;
Fig. 8A is a sectional view of the adapter attachment;
Fig. 8B is a sectional view of the adapter attachment;
Fig. 9 is a sectional view of a part of the optical connector and the adapter attachment;
Fig. 10 is a perspective sectional view showing a state in which the optical connector is being cleaned;
Fig. 11A is a plan view of the optical module attachment;
Fig. 11B is a front view of the optical module attachment;
Fig. 11C is a rear view of the optical module attachment;
Fig. 11D is a perspective sectional view of the optical module attachment;
Fig. 12A is a perspective view of the optical connector and the attachment;
Fig. 12B is a perspective view of the optical connector, the attachment, and the optical connector cleaning tool;
Fig. 12C is a perspective sectional view showing a state in which one ferule is being cleaned;
Fig. 13A is a perspective sectional view showing a state in which the optical connector cleaning tool is moved after cleaning;
Fig. 13B is a perspective sectional view showing a state in which the optical connector cleaning tool is moved sideways;
Fig. 13C is a perspective sectional view showing a state in which the other ferule is being cleaned;
Fig. 14A is a perspective view showing a modification of the adapter attachment;
Fig. 14B is a perspective sectional view showing the modification of the adapter attachment;
Fig. 15A is a perspective view showing a modification of the adapter attachment;
Fig. 15B is a perspective sectional view showing a modification of the adapter attachment;
Fig. 16A is a perspective view showing a modification of the adapter attachment;
Fig. 16B is a perspective sectional view showing a modification of the adapter attachment;
Fig. 17 is a perspective view the optical connector, the adapter attachment, and the optical connector cleaning tool;
Fig. 18 is a sectional view showing a use state of an adapter attachment including a projection;
Fig. 19 is a perspective sectional view showing the adapter attachment; and
Fig. 20 is a perspective view showing a partially cutaway adapter attachment.

### Best Mode for Carrying Out the Invention

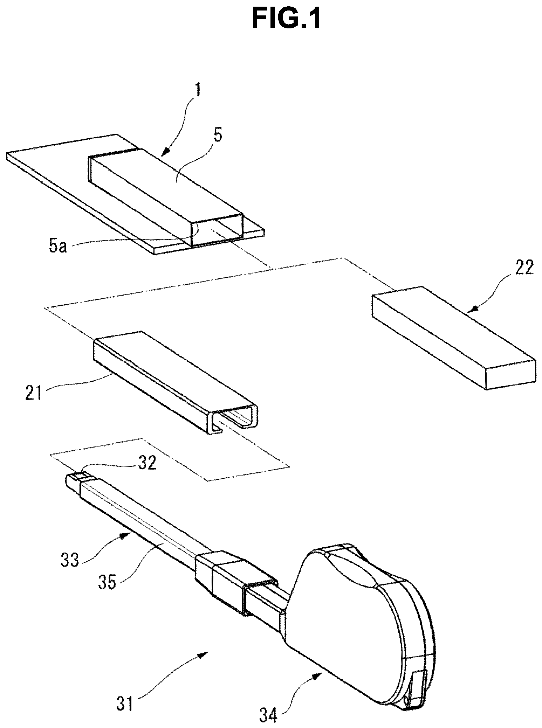

An embodiment of a cleaning assisting attachment of an optical connector cleaning tool according to the present invention will now be described in detail with reference to Figs. 1 to 13. The same reference numerals as in Fig. 20 denote the same or similar members in these drawings, and a detailed description thereof will appropriately be omitted.

### (Description of Outline of Attachment)

A cleaning assisting attachment (to be simply referred to as an attachment hereinafter) 21 shown in Fig. 1 is used when cleaning an optical connector 1. In the optical connector 1, as shown in Fig. 20, two ferules 3 are arranged to be bilaterally symmetrical to each other with respect to the center of an insertion hole 5a of an adapter 5 in the left-right direction. To the adapter 5 of the optical connector 1, the attachment 21 is inserted at the time of cleaning, and an optical module 22 is inserted when connecting another optical fiber cable. In this embodiment, the optical connector 1 and the optical module 22 are "cleaning target" in the present invention.

The adapter 5 forms an outer wall located on both sides in a direction in which the two ferules 3 are arranged and also on both sides in a direction orthogonal to the direction in which the two ferules 3 are arranged and in a direction orthogonal to a direction pointed by a ferule end face 7 (cleaning target surface).

### (Description of Optical Module)

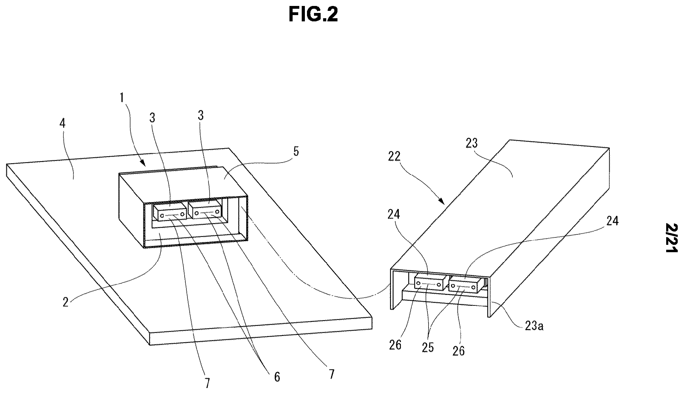

As shown in Fig. 2, the optical module 22 includes a housing 23 fitted in the adapter 5, and two ferules 24 provided in the housing 23. A distal end portion of the housing 23 of the optical module 22 (an end portion approaching the optical connector 1) includes an outer wall 23a that surrounds the ferules 24 from three sides. More specifically, the outer wall 23a is located on both sides in a direction in which the two ferules 24 are arranged and on one side in a direction orthogonal to the direction in which the two ferules 24 are arranged and in a direction orthogonal to a direction pointed by a ferule end face 26 to be described later. The outer wall 23a forms the connection portion of the optical module 22. The outer wall 23a is inserted into the adapter 5 when connecting the optical module 22 to the optical connector 1, and is inserted between the housing 2 of the optical connector 1 and the adapter 5. That is, the housing 2 of the optical connector 1 is inserted inside the outer wall 23a of the distal end portion of the optical module 22.

Like the ferules 3 of the optical connector 1, each ferule 24 of the optical module 22 is provided with a plurality of optical fibers 25 arranged in line in the left-right direction in Fig. 2. The optical fibers 25 are exposed to the ferule end faces 26 that are flat connection end faces formed at the distal ends of the ferules 24. Also, the plurality of ferules 24 of the optical module 22 are juxtaposed in a direction in which the optical fibers 25 are arranged. When the optical module 22 is connected to the optical connector 1, each ferule end face 26 of the optical module 22 is connected to a corresponding one of the ferule end faces 7 of the optical connector 1 in tight contact. In the optical module 22, each ferule end face 26 is a cleaning target surface.

### (Description of Optical Connector Cleaning Tool)

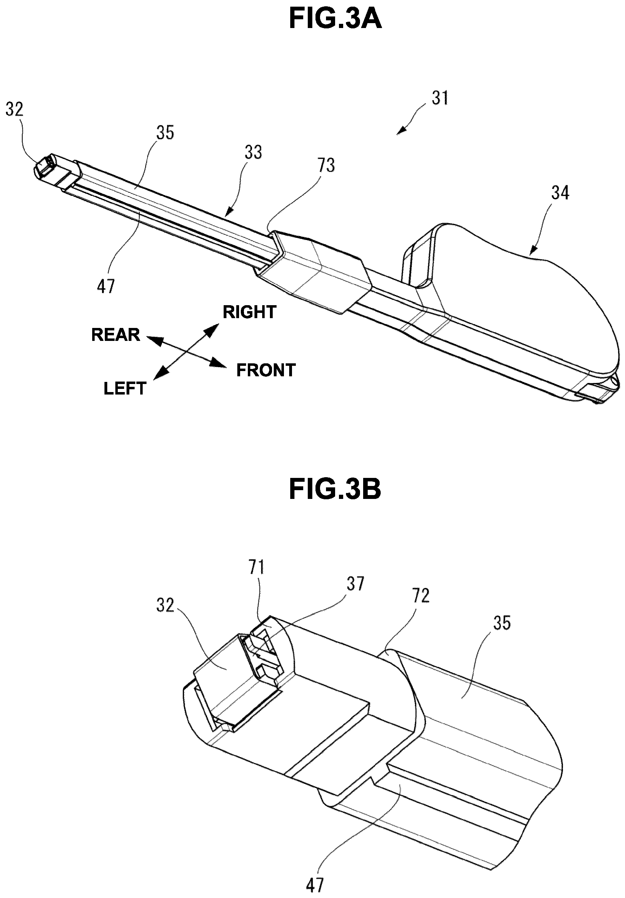

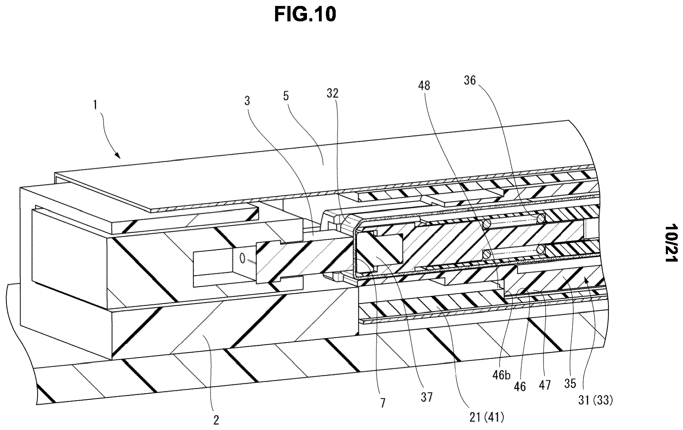

To clean the ferule end faces 7 of the optical connector 1 and the ferule end faces 26 of the optical module 22, an optical connector cleaning tool 31 shown in Fig. 1 is used. As shown in Figs. 3A and 3B, the optical connector cleaning tool 31 includes a long rod-shaped cleaning unit 33 with a distal end to which a cleaning medium 32 is exposed, and a main body portion 34 connected to the proximal end portion of the cleaning unit 33. The cleaning unit 33 includes a guide 35 having a prism shape, and a cleaning head 37 (see Fig. 3B) that is supported to be freely protruded and retreated from the distal end portion of the guide 35 and biased by a spring member 36 (see Fig. 10) in a direction of exiting from the guide 35. The cleaning unit 33 is configured to translate in the longitudinal direction of the cleaning unit 33 with respect to the main body portion 34.

The cleaning medium 32 according to this embodiment has a long band shape. The cleaning medium 32 is folded back at the cleaning head 37 to extend inside the cleaning unit 33 toward the main body portion 34, and is connected to a supply bobbin (not shown) and a winding bobbin (not shown) stored in the main body portion 34. The winding bobbin is interlockingly connected to a medium feed mechanism (not shown) and driven by the medium feed mechanism. The medium feed mechanism is configured such that the winding bobbin winds the cleaning medium 32 by a predetermined length when the main body portion 34 performs one reciprocating operation of moving to the distal end side with respect to the cleaning unit 33 and then returning to the initial position. The cleaning medium 32 moves such that it is pulled out from the supply bobbin when wound by the winding bobbin and then folded back at the distal end of the cleaning unit 33. When the main body portion 34 performs the reciprocating operation, as described above, in a state in which the cleaning medium 32 is in contact with the cleaning target surface (the ferule end face 7 or 26), the cleaning medium 32 moves in a direction along the cleaning target surface, and the cleaning target surface is cleaned.

The cleaning head 37 projecting from the distal end of the guide 35 of the optical connector cleaning tool 31 needs to be positioned at a predetermined distance with respect to the ferule end face 7 or 26 that is the cleaning target surface.

There are roughly three methods of positioning. The first method is a method of performing positioning by making the cleaning head 37 abut against the side of the optical connector 1 (the side of the optical module 22). In this case, there is possibility that a flat surface suitable for positioning is not formed on the optical connector 1 or the optical module 22. The second method is a method using the end face of the insertion port of the adapter 5. In this case, since the distance from the ferule end face 7 or 26 is long, positioning accuracy may be low. The third method is a method using an attachment in which a butt surface is provided. A cleaning assisting attachment according to the present invention employs this method.

### (Detailed Description of Adapter Attachment)

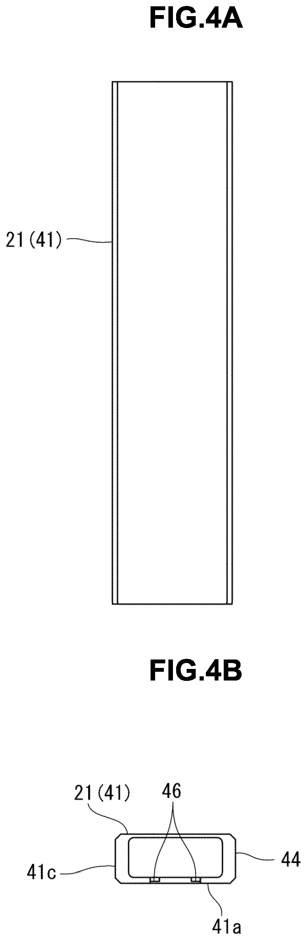

The cleaning assisting attachment according to the present invention is configured as shown in Figs. 4A to 4D. The attachment 21 shown in Figs. 4A to 4D is an adapter attachment used when cleaning the optical connector 1, and is formed by a tubular body 41 that has a rectangular tubular shape and is fitted in the connection portion (adapter 5) of the optical connector 1.

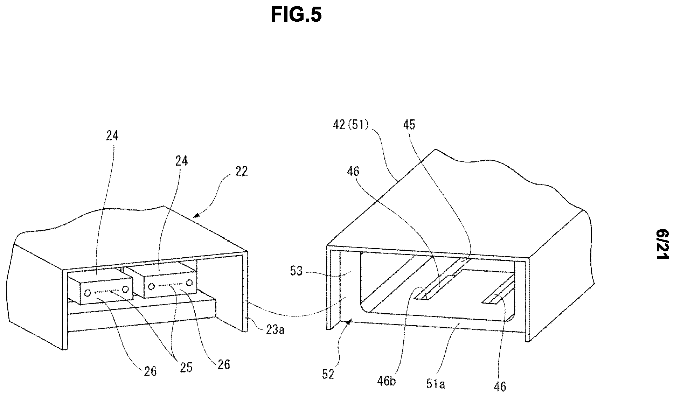

If the cleaning target is the optical module 22, an optical module attachment 42 shown in Fig. 5 is used. The optical module attachment 42 will be described later.

As for directions in the following description of the attachments 21 and 42, a direction in which the plurality of ferules 3 or 24 in the optical connector 1 or the optical module 22 are arranged is defined as the left-right direction, and a direction pointed by the ferule end faces 7 or 26 is defined as the front.

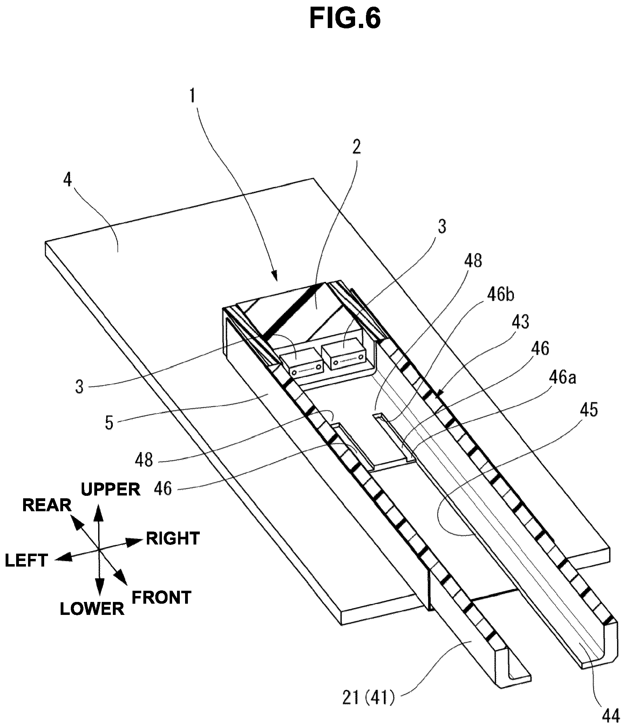

As shown in Fig. 6, the total length of the adapter attachment 21 (tubular body 41) is such a length that, in a state in which the attachment is inserted in the adapter 5 and the rear end abuts against the housing 2 of the optical connector 1, the front end projects from the adapter 5 to the front side. In the tubular body 41 according to this embodiment, the outer surface on the rear end side forms a fitting portion 43 that is fitted on the optical connector 1 that is the cleaning target. The fitting portion 43 has a shape conforming to the adapter 5 such that it is fitted inside the adapter 5, and is formed into such a shape that, in a state in which the fitting portion 43 is fitted in the adapter 5, movement of the portion fitted in the adapter 5 in a direction of moving toward the adapter 5 and movement in a direction of approaching the ferules 3 are regulated.

As shown in Fig. 6, when the rear end of the tubular body 41 abuts against the housing 2, the adapter attachment 21 is positioned with respect to the optical connector 1 in the left-right direction, the upward-downward direction, and the front-back direction.

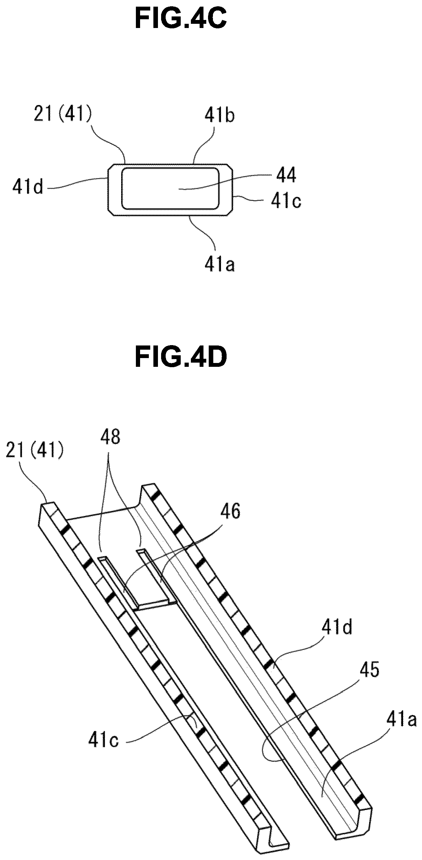

The tubular body 41 that forms the adapter attachment 21 includes a lower wall 41a, an upper will 41b, a left side wall 41c, and a right side wall 41d, as shown in Figs. 4B and 4C. A space 44 in the tubular body 41 is formed to insert the cleaning unit 33 of the optical connector cleaning tool 31. The vertical width of the space 44 in the tubular body 41, that is, the gap between the lower wall 41a and the upper will 41b is slightly wider than the vertical width of the cleaning unit 33 of the optical connector cleaning tool 31, and is set to a minimum width such that the cleaning unit 33 can be inserted without any play. The horizontal width of the internal space 44 is wider than the horizontal width of the cleaning unit 33 such that the cleaning unit 33 can move in the left-right direction.

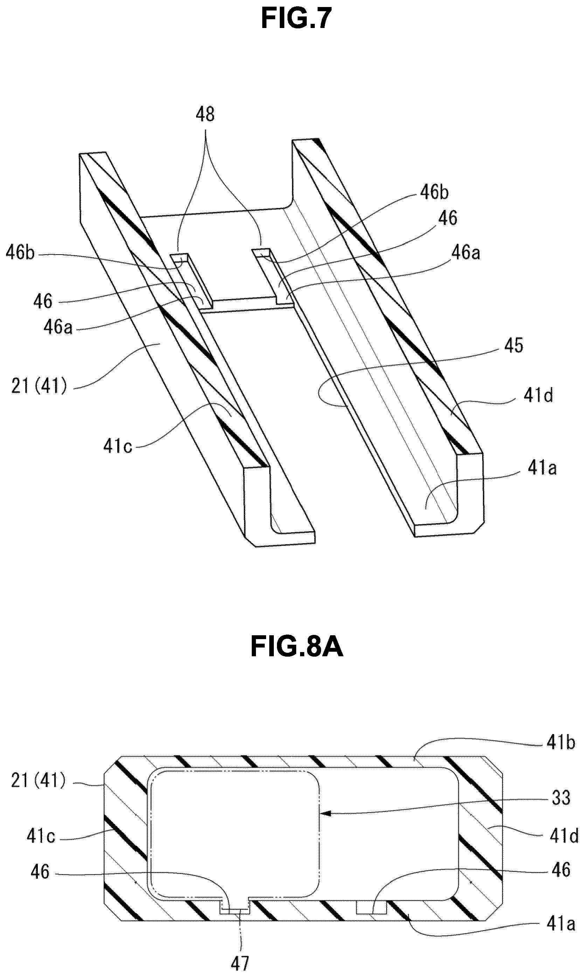

The inner surfaces of the upper will 41b, the left side wall 41c, and the right side wall 41d of the tubular body 41 are formed by flat surfaces. The lower wall 41a of the tubular body 41 according to this embodiment includes a notch 45 and two grooves 46, as shown in Fig. 7. In this embodiment, the notch 45 serves as a "common path" in the present invention, and extends from the front end of the tubular body 41 (an edge on a side opposite to the end portion fitted on the optical connector 1) to the rear end side (toward an end portion fitted on the optical connector 1). The rear end of the notch 45 is located on the front side by a predetermined length with respect to the rear end of the tubular body 41.

The two grooves 46 linearly extend from a starting end 46a that opens to the rear end of the notch 45 (the end portion of the notch 45) toward the front side of the tubular body 41 by a predetermined length up to a terminal end 46b located on the rear side (one end portion side of the tubular body 41). In this embodiment, the two grooves 46 correspond to "guide path" in the present invention. The starting end 46a of the groove 46 has an opening shape in which a projection 47 (see Figs. 3A and 3B) projecting from the cleaning unit 33 of the optical connector cleaning tool 31 is fitted. The projection 47 extends in series from the proximal end of the cleaning unit 33 to the distal end without being interrupted. The position in the left-right direction at which the projection 47 is formed is the center of the cleaning unit 33 and the cleaning medium 32 in the left-right direction. In this embodiment, the projection 47 corresponds to "guided portion" in the present invention.

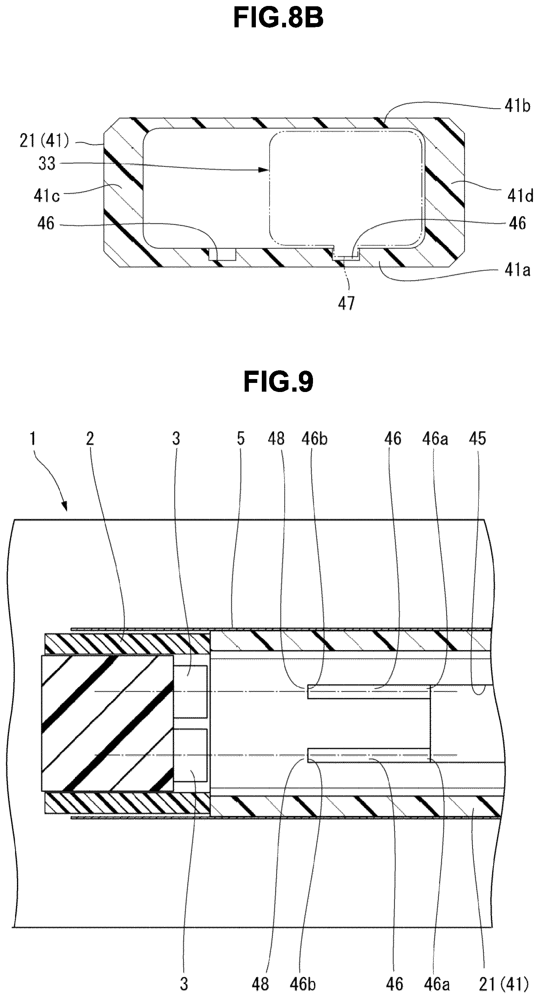

When the projection 47 is fitted in the left groove 46 of the two grooves 46, the left side surface of the cleaning unit 33 faces the left side wall 41c of the tubular body 41 with a gap that is a predetermined clearance, as shown in Fig. 8A. Also, when the projection 47 is fitted in the right groove 46, the right side surface of the cleaning unit 33 faces the right side wall 41d of the tubular body 41 with a gap that is a predetermined clearance, as shown in Fig. 8B. For this reason, when inserting the projection 47 into the groove 46, the cleaning unit 33 is moved using the left side wall 41c or the right side wall 41d as a guide. This facilitates alignment of aligning the projection 47 to the starting end 46a of the groove 46 even if the starting end 46a of the groove 46 is located in the tubular body 41.

Also, as shown in Fig. 9, the two grooves 46 are formed at positions extended from the centers of the two ferules 3 to the front side in a state in which the tubular body 41 is fitted in the adapter 5 and abuts against the housing 2. That is, the grooves 46 are formed, in the left-right direction, at the same positions as the centers of the two ferules 3 in the left-right direction, and are formed into such a shape that the projection 47 (guided portion) formed on the cleaning unit 3 is fitted in the groove at positions corresponding to all the ferules 3.

As for the position of the terminal end 46b of each of the two grooves 46, as shown in Fig. 10, in a state in which the tubular body 41 is fitted in the adapter 5 and abuts against the housing 2, when the projection 47 of the optical connector cleaning tool 31 abuts, the cleaning medium 32 contacts the ferule end face 7 that is the cleaning target surface of the ferule 3. That is, the tubular body 41 is provided with a stopper 48 that abuts against the optical connector cleaning tool 1 and regulates movement of the cleaning unit 33 in the insertion direction in a state in which the cleaning unit 33 is inserted into the internal space 44, and the cleaning medium 32 contacts the cleaning target surface that is the distal end surface of the ferule 3. Note that the stopper 48 can be omitted in a case where, as the optical connector cleaning tool, the cleaning unit is pressed against the cleaning target at the time of cleaning to regulate the movement in the insertion direction.

Since the two grooves 46 are formed at the positions matching the centers of the ferules 3 in the left-right direction, when the projection 47 abuts against the terminal end 46b of the groove 46, the cleaning medium 32 comes into contact with the ferule end face 7 in a state in which the centers in the left-right direction match.

### (Description of Optical Module Attachment)

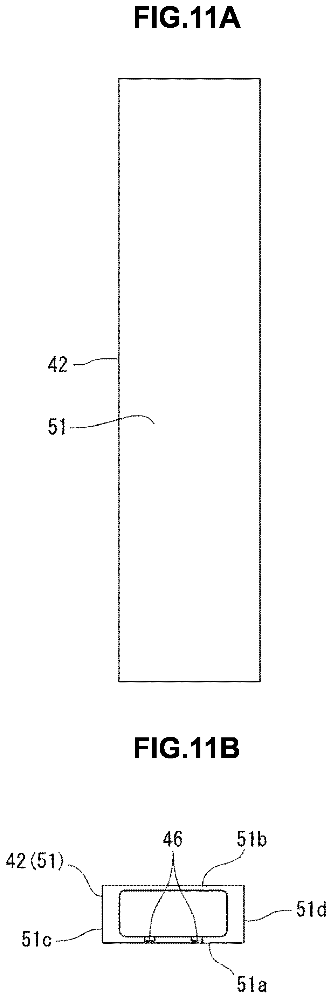

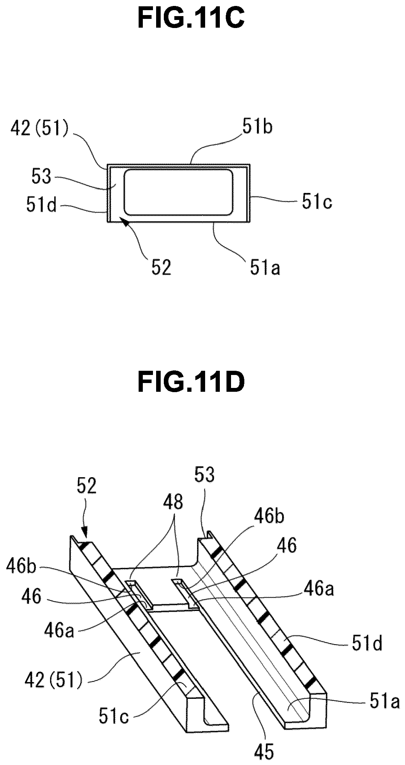

As shown in Figs. 5 and 11A to 11D, the optical module attachment 42 is different from the adapter attachment 21 in the structure of a rear end portion connected to the optical module 22, and the rest of the structure is the same.

The optical module attachment 42 according to this embodiment is formed by a tubular body 51 having a rectangular tubular shape. The tubular body 51 includes a lower wall 51a, an upper will 51b, a left side wall 51c, and a right side wall 51d. A fitting portion 52 in which the optical module 22 as the cleaning target is fitted is provided at the rear end portion of the tubular body 51. The fitting portion 52 is formed by a concave portion 53 in which the outer wall 23a of the optical module 22 is inserted and fitted. More specifically, the fitting portion 52 has a shape conforming to the outer wall 23a such that it is fitted outside the outer wall 23a of the optical module 22, and is formed into such a shape that, in a state in which the fitting portion 52 is fitted on in the outer wall 23a, movement of the portion fitted on the outer wall 23a in a direction of moving toward the outer wall 23a and movement in a direction of approaching the ferule 24 of the optical module 22 are regulated.

When the outer wall 23a of the optical module 22 is fitted in the fitting portion 52 and abuts against the bottom of the fitting portion 52, the optical module attachment 42 is positioned with respect to the optical module 22 in the left-right direction, the upward-downward direction, and the front-back direction.

The rest of the configuration of the optical module attachment 42 is the same as the adapter attachment 21. For this reason, in the lower wall 51a of the tubular body 51 that forms the optical module attachment 42 according to this embodiment, the notch 45 and the two grooves 46 are formed. In this case as well, the stopper 48 is implemented by the terminal end 46b of the groove 46. When the optical connector cleaning tool 31 is inserted into the tubular body 51 in a state in which the tubular body 51 is fitted on the optical module 22, and the projection 47 abuts against the terminal end 46b of the groove 46 to regulate movement by the stopper 48, the cleaning medium 32 comes into contact with the ferule 24 of the optical module 22.

### (Description of Cleaning Operation)

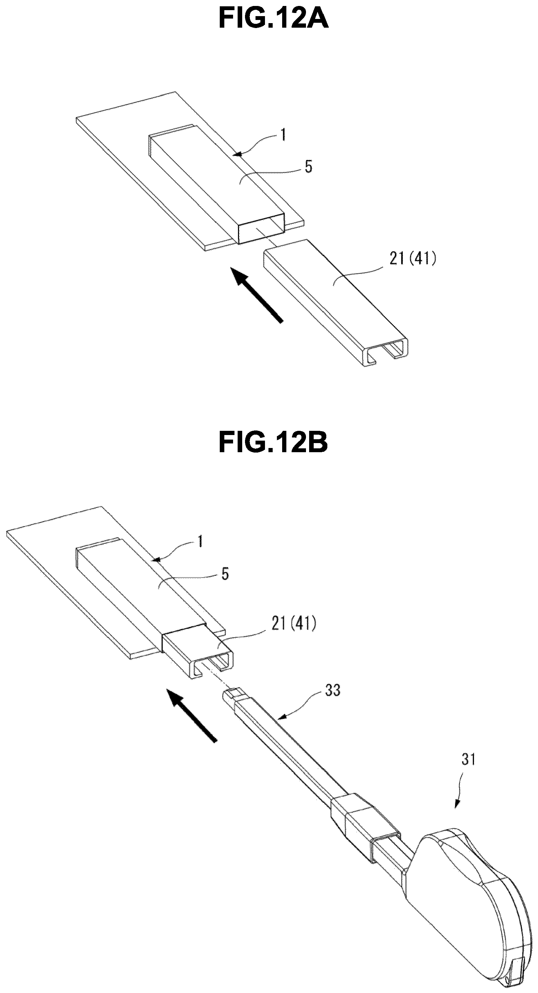

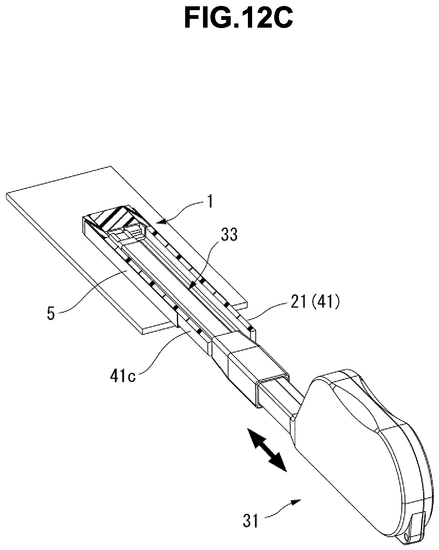

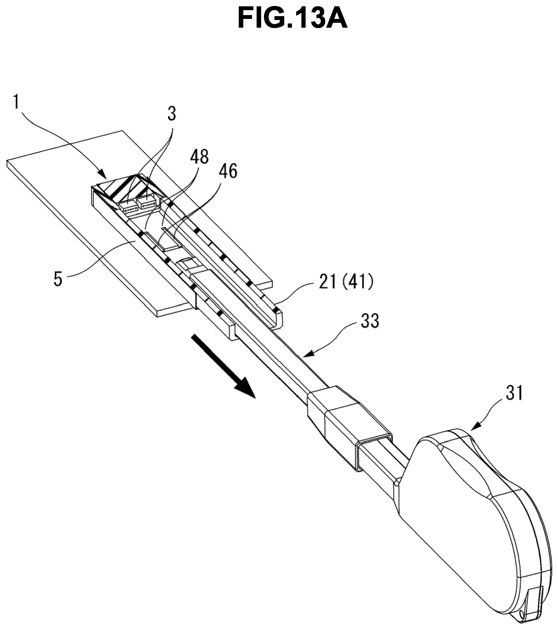

A procedure when cleaning the ferule end face 7 or 26 of the optical connector 1 or the optical module 22 using the attachment 21 or 42 as described above will be described next. Since the cleaning procedure in a case where the optical connector 1 is cleaned and that in a case where the optical module 22 is cleaned are not different, the cleaning procedure in a case where the optical connector 1 is cleaned will be described here with reference to Figs. 12A to 12C and 13A to 13C. In Figs. 12C and 13A to 13C, the optical connector 1 and the attachment 21 are partially cut such that the optical connector cleaning tool 31 is exposed.

First, as shown in Figs. 12A and 12B, the adapter attachment 21 is inserted into the adapter 5 of the optical connector 1 to make the rear end of the tubular body 41 abut against the housing 2. Note that if the optical module 22 is the cleaning target, the housing 23 of the optical module 22 is inserted into the fitting portion 52 of the optical module attachment 42 and fitted at this time.

After the tubular body 41 is inserted into the adapter 5, as shown in Figs. 12B and 12C, the cleaning unit 33 of the optical connector cleaning tool 31 is inserted into the tubular body 41. The insertion operation is performed while moving the cleaning unit 33 along one of the inner wall surfaces of the hollow portion of the tubular body 41 in the left-right direction. For example, if the cleaning unit 33 is inserted into the tubular body 41 along the left side wall 41c of the tubular body 41, the projection 47 of the cleaning unit 33 enters the left groove 46.

Then, in a state in which the projection 47 is in the groove 46, the optical connector cleaning tool 31 is further moved to make the projection 47 abut against the terminal end 46b of the groove 46. When the projection 47 abuts against the terminal end 46b, and movement of the cleaning unit 33 in the insertion direction is regulated by the stopper 48, the cleaning medium 32 in a positioned state comes into contact with the ferule end face 7 of the ferule 3 on the left side. When, in this state, one reciprocating operation of the medium feed mechanism to move the main body portion 34 of the optical connector cleaning tool 31 toward the optical connector 1 and then return it to the initial position is executed, the cleaning medium 32 is moved and folded back at the cleaning head 37, and the ferule end face 7 is cleaned.

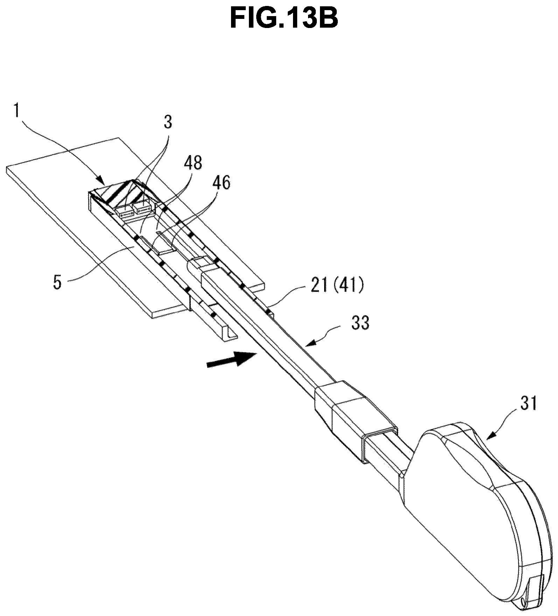

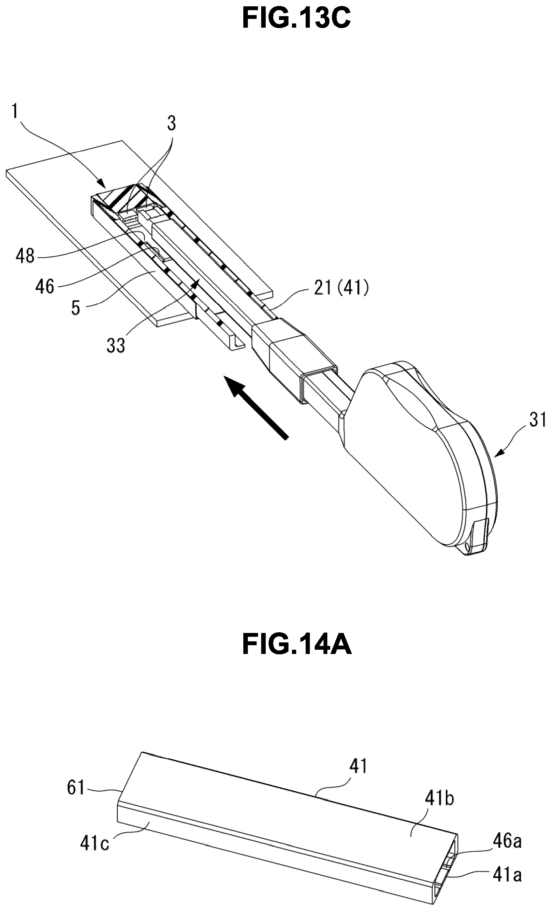

After the cleaning of the ferule 3 is ended, as shown in Fig. 13A, the optical connector cleaning tool 31 is pulled to the front side and held in a state in which the projection 47 is out of the groove 46. At this time, the projection 47 is in the notch 45. Then, as shown in Figs. 13 and 13B, the optical connector cleaning tool 31 is slid from the left side to the right side in the tubular body 41 to locate the cleaning unit 33 along the right side wall 41d of the tubular body 41. After that, as shown in Fig. 13C, the optical connector cleaning tool 31 is moved to the rear side. When the optical connector cleaning tool 31 moves to the rear side, the projection 47 enters the right groove 46. Then, one reciprocating operation of the medium feed mechanism to move the optical connector cleaning tool 31 until the projection 47 abuts against the terminal end 46b of the groove 46 (until movement is regulated by the stopper 48), further move the main body portion 34, and then return it to the initial position is executed. By operating the main body portion 34 in this way, the ferule end face 7 of the ferule 3 on the right side is cleaned by the cleaning medium 32.

Hence, when the adapter attachment 21 (optical module attachment 42) according to this embodiment is used, it is possible to, when cleaning all the ferules 3, clean the ferule end faces 7 of the plurality of ferules 3 without detaching the attachment 21 or 42 from the optical connector 1 or optical module 22 and also without pulling the optical connector cleaning tool 31 out of the attachment 21 or 42.

According to this embodiment, since the optical connector cleaning tool 31 is moved in the left-right direction in a state in which the projection 47 is located in the notch 45 in the process of cleaning, it is possible to easily perform the cleaning work as compared to a case where the notch 45 is not provided. If the notch 45 is not provided, it is necessary to perform a work of pulling the cleaning unit 33, which is formed long so as to be insertable into the long tubular body 41, out of the tubular body 41, moving it in the left-right direction, and then inserting the cleaning unit 33 into the tubular body 41. For this reason, as compared to this case, employment of this embodiment obviates the necessity of the work of inserting/removing the optical connector cleaning tool 31 and facilitates cleaning of the plurality of ferules 3.

Hence, according to this embodiment, when cleaning an optical connector or optical module including a plurality of ferules using an attachment, it is possible to provide a cleaning assisting attachment of an optical connector cleaning tool, which can be applied even if the interval between the ferules is small.

Particularly, in this embodiment, since the stopper 48 is implemented by forming the grooves 46 with the closed terminal ends 46b in the attachment 21 or 42, and the optical connector cleaning tool 31 is positioned with respect to the ferule 3 or 24, design can be done without depending on the shape of the optical connector 1 or the adapter 5, and the risk to impart overload to the cleaning target side is small.

### (Modifications of Attachment)

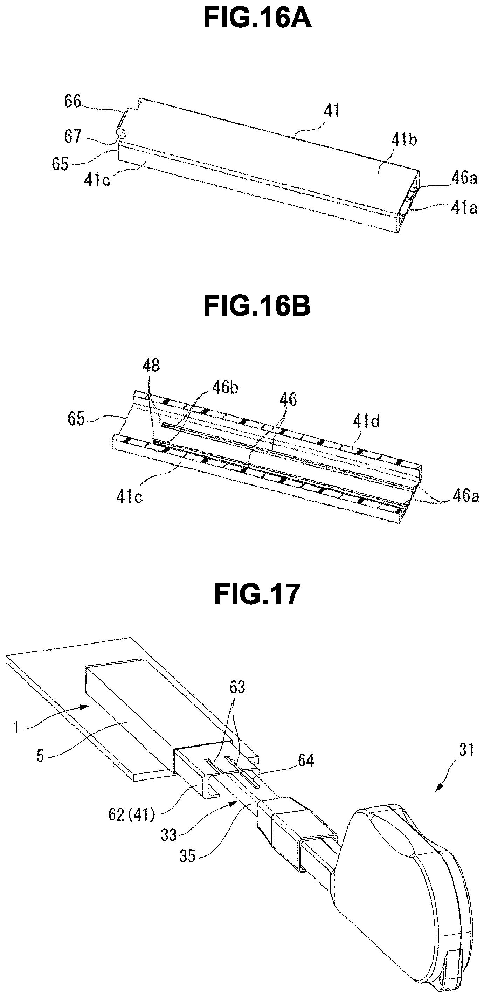

The attachment can be configured as shown in Figs. 14A, 14B, 15A, 15B, 16A, and 16B. Modifications of the adapter attachment will be described here, and the optical module attachment can similarly be configured. The same reference numerals as in Figs. 1 to 13 denote the same or similar members in Figs. 14A to 16B, and a detailed description thereof will appropriately be omitted.

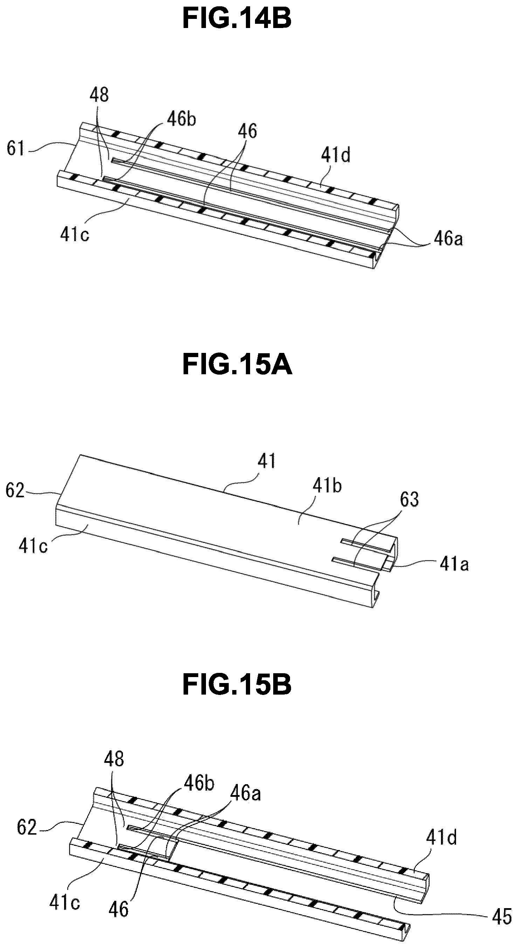

In an adapter attachment 61 shown in Figs. 14A and 14B, the notch 45 is not formed in the lower wall 41a of the tubular body 41. The two grooves 46 extend from the starting ends 46a opening to the front end of the tubular body 41 to the terminal ends 46b without being interrupted.

When using the adapter attachment 61 formed as shown in Figs. 14A and 14B, after one ferule 3 is cleaned, the optical connector cleaning tool 31 is pulled out of the tubular body 41 and moved in the left-right direction. Then, the cleaning unit 33 is inserted into the tubular body 41 such that the projection 47 enters the other groove 46.

Even if the attachment 61 is formed as shown in Fig. 14A and 14B, it is possible to clean the plurality of ferules 3 without detaching the attachment 61 from the adapter 5.

In an adapter attachment 62 shown in Figs. 15A and 15B, two slits 63 are formed in the upper will 41b that is another wall facing the lower wall 41a with the two grooves 46 formed therein. The slits 63 extend from the front end of the upper will 41b (an edge on a side opposite to the end portion fitted on the optical connector 1) to the end portion fitted on the optical connector 1 (rear side). The slit 63 corresponds to "guide path on the other end side" in the present invention.

The two slits 63 are formed into such a shape that another projection 64 (see Fig. 17) projecting from the cleaning unit 33 of the optical connector cleaning tool 31 independently of the above-described projection 47 is fitted. In this embodiment, the other projection 64 corresponds to "another guided portion" in the present invention. Also, the two slits 63 are formed at positions where the other projection 64 is fitted in a state in which the projection 47 on the distal end side of the optical connector cleaning tool 31 abuts against the terminal end 46b of the groove 46, and the optical connector cleaning tool 31 is located at the cleaning position.

If the notch 45 and the two grooves 46 are provided in the attachment 62, the optical connector cleaning tool 31 is positioned by the short fitting portion between the groove 46 and the projection 47 at the distal end portion of the optical connector cleaning tool 31. The optical connector cleaning tool 31 is formed to be long. For this reason, in this case, the optical connector cleaning tool 31 readily tilts in the left-right direction with respect to the fitting portion between the projection 47 and the groove 46 as the center.

However, as shown in this embodiment, if the other projection 64 of the optical connector cleaning tool 31 is fitted in the slit 63 formed at the front end portion of the attachment 62, swing of the optical connector cleaning tool 31 in the left-right direction is suppressed.

In addition, since it is possible to confirm, based on the position of the other projection 64 with respect to the slit 63, that the projection 47 at the distal end portion of the optical connector cleaning tool 31 enters the groove 46, it can visually be confirmed that the guide 35 of the optical connector cleaning tool 31 is inserted straight and abuts.

An adapter attachment 65 shown in Figs. 16A and 16B includes a projecting piece 66 at the rear end portion close to the optical connector 1. The projecting piece 66 is provided on the upper will 41b of the tubular body 41 to project backward. At the distal end portion of the projecting piece 66, a projection 67 projecting from the side of the upper will 41b to the side of the lower wall 41a is formed.

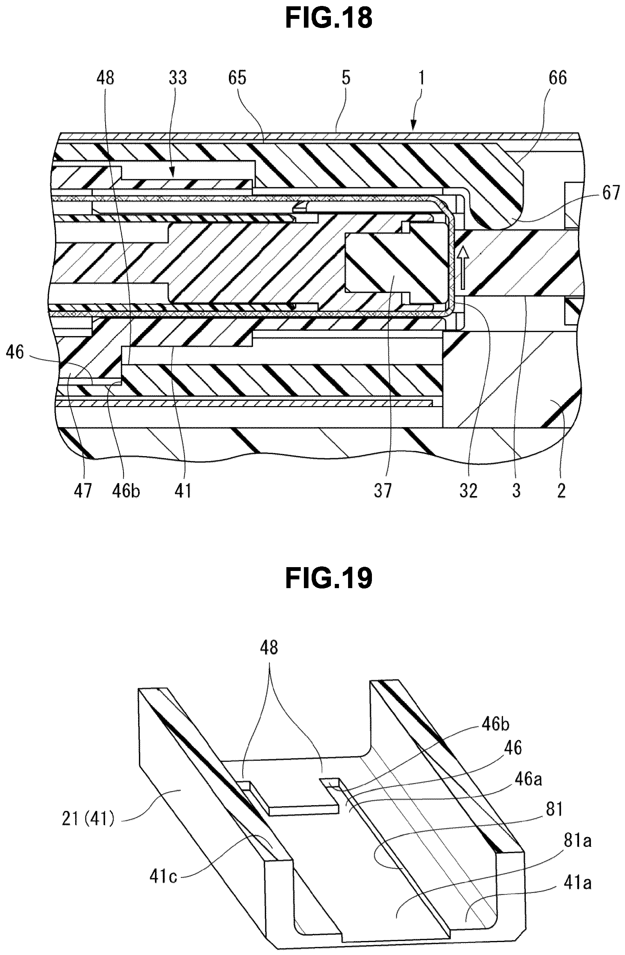

As shown in Fig. 18, the projection 67 is formed to contact the side portion of the ferule 3 from the upper side in a state in which the rear end of the tubular body 41 abuts against the housing 2 of the optical connector 1. The position where the projection 67 contacts the ferule 3 is set based on the direction of movement of the cleaning medium 32.

The optical connector cleaning tool 31 according to this embodiment performs cleaning by moving the cleaning medium 32 in one direction along the ferule end face 7 (cleaning target surface) of the ferule 3. The direction of the cleaning medium 32 moving along the ferule end face 7 is the direction from the lower side to the upper side, as indicated by an arrow in Fig. 18. When the cleaning medium 32 moves in this way while contacting the ferule end face 7 at the time of cleaning, the ferule 3 is pulled in the same direction as the cleaning medium 32 due to a friction resistance. That is, the ferule 3 is pulled in a direction in which the ferule end face 7 moves upward.

The holding portion of the ferule 3, in other words, the portion where the ferule 3 is fitted in the housing 2 has a so-called fit tolerance, and a small gap exists between the ferule 3 and the housing 2. If the gap is maximum within the allowable range of the fit tolerance, the ferule 3 may tilt when pulled as described above. If cleaning is performed in a state in which the ferule 3 tilts, an even pressing force cannot be obtained when the cleaning head 37 presses the cleaning medium 32 against the ferule end face 7, and an unwiped area readily occurs.

The projecting piece 66 is located on the downstream side of the direction of the cleaning medium 32 moving at the time of cleaning (on the upper side in Fig. 18). When the projecting piece 66 abuts against the ferule 3, a tensile force acting on the ferule 3 due to the friction to the cleaning medium 32 can be received by the projecting piece 66. For this reason, according to this embodiment, it is possible to suppress tilt of the ferule 3 at the time of cleaning and correctly perform cleaning so no unwiped area occurs.

In the above-described embodiments, an example in which the two grooves 46 are formed in the lower wall 41a of the tubular body 41 has been described. However, the grooves 46 can be formed in the upper will 41b or in both the lower wall 41a and the upper will 41b.

Also, in the above-described embodiments, an example in which the two ferules 3 are provided at positions symmetrical with respect to the center of the insertion hole 5a of the adapter 5 in the left-right direction has been described. However, the present invention is not limited to this. That is, even if the ferules 3 are provided at positions asymmetrical with respect to the center of the insertion hole 5a of the adapter 5 in the left-right direction by forming the grooves 46 at positions corresponding to the centers of the ferules 3 in the left-right direction in the attachment, it is possible to guide the cleaning medium 32 to both the ferules 3 and correctly clean both the ferules 3.

In the above-described embodiments, an example in which the cleaning unit 33 is positioned in the left-right direction to correspond to the ferule 3 by the two grooves 46 formed in the tubular body 41 and the projection 47 of the cleaning unit 33 that is fitted in the groove 46 has been described. However, the present invention is not limited to this. That is, the projection 47 may be formed on the tubular body 41, and the grooves 62 may be formed in the cleaning unit 33.

In the embodiment shown in Figs. 15A, 15B, and 17, an example in which the slits 63 are formed in the tubular body 41 to suppress swing of the optical connector cleaning tool 31, and the projection 64 to be fitted in the slit 63 projects from the cleaning unit 33 has bene described. However, the present invention is not limited to this. That is, the projection 64 may be formed on the tubular body 41, and a concave portion in which the projection 64 is fitted may be formed in the cleaning unit 33.

In the above-described embodiments, an example in which the stopper 48 is implemented by the terminal end 46b of the groove 46 formed in the tubular body 41 or 51 has been described. However, the stopper 48 can be provided on another part of the tubular body 41 or 51 if it can abut against the optical connector cleaning tool 31 and regulate movement in the insertion direction. For example, the stopper 48 can be provided at a position where it abuts against a distal end face 71 of the guide 35, at a position where it abuts against a step portion 72 formed on the distal end side of the guide 35, as shown in Fig. 3B, or at a position where it abuts against an end face 73 of the main body portion 34 shown in Fig. 3A.

In the attachment 21 shown in Fig. 4D and the attachment 42 shown in Fig. 11D, the notch 45 is formed as the "common path". However, the common path can be formed by a wide groove 81, as shown in Fig. 19. The groove 81 is formed such that a thin wall 81a that closes the opening portion of the notch 45 serves as a groove bottom. The upper surface of the wall 81a shown in Fig. 19 is formed to be located on the same plane as the groove bottoms of the two grooves 46.

### (Supplementary Note)

Feature items of the cleaning assisting attachment of the optical connector cleaning tool according to the above-described embodiment are as follows.

### (Feature Item 1)

A cleaning assisting attachment 21 or 42 of an optical connector cleaning tool according to the above-described embodiment is formed from a tubular body 41 or 51 in which a cleaning unit 33 of the optical connector cleaning tool 31 can be inserted, the optical connector cleaning tool 31 being configured to clean a cleaning target surface (ferule end face 7 or 26), to which an optical fiber 6 or 25 is exposed, using a cleaning medium 32 at a distal end portion of the rod-shaped cleaning unit 33, a fitting portion 43 or 52 configured to fit on a cleaning target (optical connector 1 or optical module 22) including a plurality of ferules 3 or 24 each having the cleaning target surface formed at a distal end is formed at one end portion of the tubular body 41 or 51, the cleaning target includes an outer wall (adapter 5 or outer wall 23a) located on both sides in a direction in which the plurality of ferules 3 or 24 are arranged and at least on one side in a direction orthogonal to the direction in which the plurality of ferules 3 or 24 are arranged and in a direction orthogonal to a direction pointed by the cleaning target surface, the fitting portion has a shape conforming to the outer wall such that the fitting portion is fitted inside or outside the outer wall, and is formed into such a shape that, in a state in which the fitting portion is fitted in the outer wall, movement of a portion fitted in the outer wall in a direction of moving toward the outer wall and movement in a direction of approaching the ferule 3 or 24 are regulated, a space in the tubular body 41 or 51 is formed to be wider than a width of the cleaning unit 33 in the direction in which the plurality of ferules 3 or 24 are arranged, a plurality of guide paths (grooves 46) extending in a longitudinal direction of the tubular body 41 or 51 are formed in an inner wall of the tubular body 41 or 51, and the guide paths are formed into such a shape that a guided portion (projection 47) formed by one of a convex portion and a concave portion formed on the cleaning unit 33 is fitted at positions corresponding to all the ferules 3 or 24.

### (Feature Item 2)

In the cleaning assisting attachment 21 of the optical connector cleaning tool defined in above (Feature Item 1), the tubular body 41 or 51 includes a common path (notch 45 or groove 81) extending from an edge on a side opposite to an end portion fitted on the cleaning target (optical connector 1 or optical module 22) to the end portion, and starting ends 46a of the plurality of guide paths are provided at an end portion of the notch 45.

### (Feature Item 3)

In the cleaning assisting attachment 21 or 42 of the optical connector cleaning tool 31 defined in above (Feature Item 2), the tubular body 41 or 51 is formed into a rectangular tubular shape, the plurality of guide paths are formed in one wall (lower wall 41a or 51a) of the tubular body 41 or 51, a plurality of guide paths (slits 63) on the other end side, which extend from the edge on the side opposite to the end portion of the tubular body 41 or 51 fitted on the cleaning target to the end portion are formed in another wall (upper will 41b or 51b) facing the wall of the tubular body 41 or 51 in which the plurality of guide paths are formed, and the guide paths on the other end side are each formed into such a shape that another guided portion (projection 64) formed by one of a convex portion and a concave portion formed on the cleaning unit 33 independently of the guided portion is fitted, and formed at a position where the other guided portion is fitted in a state in which the optical connector cleaning tool 31 is located at a cleaning position where the cleaning target surface of the ferule is cleaned by the cleaning medium 32.

### (Feature Item 4)

In the cleaning assisting attachment 21 or 42 of the optical connector cleaning tool 31 defined in above (any one of Feature Items 1 to 3), the optical connector cleaning tool 31 performs cleaning by moving the cleaning medium 32 in one direction along the cleaning target surface of the ferule, the tubular body 41 or 51 includes a projecting piece 66 configured to come into contact with a side portion of the ferule in a state in which the fitting portion is fitted on the cleaning target, and the projecting piece 66 is located on a downstream side in a direction of moving the cleaning medium 32.

### (Feature Item 5)

In the cleaning assisting attachment 21 or 42 of the optical connector cleaning tool 31 defined in above (Feature Item 1), the tubular body 41 or 51 is provided with a stopper 48 configured to abut against the optical connector cleaning tool 31 and regulate movement of the cleaning unit 33 in an insertion direction in a state in which the cleaning unit 33 is inserted into the internal space 44, and the cleaning medium 32 is in contact with the cleaning target surface (ferule end face 7 or 26) that is a distal end face of the ferule 3 or 24.

### (Feature Item 6)

In the cleaning assisting attachment 21 or 42 of the optical connector cleaning tool defined in above (Feature Item 1), the stopper 48 is formed by a terminal end 46b of the guide path (groove 46).

### Explanation of the Reference Numerals and Signs

1...optical connector (cleaning target), 3, 24...ferule, 6, 25...optical fiber, 7, 26...ferule end face (cleaning target surface), 21, 42, 61, 62, 65...cleaning assisting attachment, 21, 22...optical module (cleaning target), 31...optical connector cleaning tool, 32...cleaning medium, 33...cleaning unit, 41, 51...tubular body, 41a, 51a...lower wall, 41b...upper will, 43...fitting portion, 44...space, 45...notch (common path), 46...groove (guide path), 46a...starting end, 46b...terminal end, 47...projection (guided portion), 48...stopper, 63...slit (guide path on the other end side), 64...another projection (other guided portion), 66...projecting piece, 81...groove (common path) .

## Claims

1. A cleaning assisting attachment of an optical connector cleaning tool, the cleaning assisting attachment comprising
a tubular body in which a cleaning unit of the optical connector cleaning tool can be inserted, the optical connector cleaning tool being configured to clean a cleaning target surface, to which an optical fiber is exposed, using a cleaning medium at a distal end portion of the rod-shaped cleaning unit, wherein
the tubular body includes a fitting portion configured to fit on a cleaning target including a plurality of ferules each having the cleaning target surface formed at a distal end is formed at one end portion of the tubular body,
the cleaning target includes an outer wall located on both sides in a direction in which the plurality of ferules are arranged and at least on one side in a direction orthogonal to the direction in which the plurality of ferules are arranged and in a direction orthogonal to a direction pointed by the cleaning target surface,
the fitting portion has a shape conforming to the outer wall such that the fitting portion is fitted inside or outside the outer wall, and is formed into such a shape that, in a state in which the fitting portion is fitted in the outer wall, movement of a portion fitted in the outer wall in a direction of moving toward the outer wall and movement in a direction of approaching the ferule are regulated,
a space in the tubular body is formed to be wider than a width of the cleaning unit in the direction in which the plurality of ferules are arranged,
a plurality of guide paths extending in a longitudinal direction of the tubular body are formed in an inner wall of the tubular body, and
the guide paths are formed into such a shape that a guided portion formed by one of a convex portion and a concave portion formed on the cleaning unit is fitted at positions corresponding to all the ferules.

2. The cleaning assisting attachment of the optical connector cleaning tool according to claim 1, wherein
the tubular body includes a common path extending from an edge on a side opposite to an end portion fitted on the cleaning target to the end portion, and
starting ends of the plurality of guide paths are provided at an end portion of the common path.

3. The cleaning assisting attachment of the optical connector cleaning tool according to claim 2, wherein
the tubular body is formed into a rectangular tubular shape,
the plurality of guide paths are formed in one wall of the tubular body,
a plurality of guide paths on the other end side, which extend from the edge on the side opposite to the end portion of the tubular body fitted on the cleaning target to the end portion are formed in another wall facing the wall of the tubular body in which the plurality of guide paths are formed, and
the guide paths on the other end side are each formed into such a shape that another guided portion formed by one of a convex portion and a concave portion formed on the cleaning unit independently of the guided portion is fitted, and formed at a position where the other guided portion is fitted in a state in which the optical connector cleaning tool is located at a cleaning position where the cleaning target surface of the ferule is cleaned by the cleaning medium.

4. The cleaning assisting attachment of the optical connector cleaning tool according to any one of claims 1 to 3, wherein
the optical connector cleaning tool performs cleaning by moving the cleaning medium in one direction along the cleaning target surface of the ferule,
the tubular body includes a projecting piece configured to come into contact with a side portion of the ferule in a state in which the fitting portion is fitted on the cleaning target, and
the projecting piece is located on a downstream side in a direction of moving the cleaning medium.

5. The cleaning assisting attachment of the optical connector cleaning tool according to claim 1, wherein
the tubular body is provided with a stopper configured to abut against the optical connector cleaning tool and regulate movement of the cleaning unit in an insertion direction in a state in which the cleaning unit is inserted into the internal space, and the cleaning medium is in contact with the cleaning target surface that is a distal end face of the ferule.

6. The cleaning assisting attachment of the optical connector cleaning tool according to claim 5, wherein
the stopper is formed by a terminal end of the guide path.
